# EUROPÄISCHE PATENTANMELDUNG

(11) **EP 1 364 996 A1**
(43) Veröffentlichungstag der Anmeldung: **26.11.2003**
(21) Anmeldenummer: 02011499.7
(22) Anmeldetag: 25.05.2002
(51) Int. Cl.: C09D 7/12, D06M 17/06

(54) **Lackmischung sowie Verwendungen derselben**

(71) Anmelder: Nielaba, Martin, 3018 Bern (CH)
(72) Erfinder: Nielaba, Martin, 3018 Bern (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Zusammenfassung**

Eine Lackmischung besteht wenigstens aus einem Reaktionsharz, insbesondere Acrylatharz, als Binder, einem Härter und einem Weichmacher, der volumenmässig einen mindestens ebenso grossen Anteil der Lackmischung darstellt wie der Binder. Bis 20 Vol-% eines geeigneten Lösungsmittels können zur Verbesserung der Verarbeitungseigenschaften (Spritzen, Streichen, Giessen usw.) zugesetzt werden. Diese Lackmischung ergibt nach dem Trocknen ein belastbares, aber flexibles Material. Sie kann als Überzug, Imprägnierung oder Einbettungsmatrix verwendet werden, gegebenenfalls auch als klebrige Verbindungsschicht ausgebildet werden. Zusätze von geeigneten Füllern und Hilfsstoffen, z.B. Steinmehl, Holzfasern, Farbstoffen, dienen der Einstellung des Aussehens.

## Beschreibung

Die vorliegende Erfindung bezieht sich auf eine Lackmischung sowie auf Verwendungen derselben zur Beschichtung von Substraten zum Imprägnieren und Kleben und zur Vermischung mit Materialpartikeln.

Es besteht oft ein Bedarf, ein vorgegebenes Material mit der typischen Eigenschaft von Polymermaterial oder Kunststoff zu versehen, wie Wasserdichtigkeit, geringe Wasserspeicherkapazität, glatte oder glänzende Oberfläche, Korrosionsbeständigkeit usw. Zu diesem Zweck wurden die Materialien, soweit es überhaupt in Betracht kam, mit Polymermaterial imprägniert, getränkt und/oder überzogen. Allerdings musste dabei immer ein Kompromiss geschlossen werden. Z. B. wurden flexible Textilmaterialien steif, oder es wurde nicht die geforderte Beständigkeit gegen Umwelteinflüsse erzielt. In anderen Anwendungen konnte auch nicht eine im optischen Eindruck mit dem Original übereinstimmende und trotzdem widerstandsfähige Oberfläche erzielt werden.

Eine Aufgabe der vorliegenden Erfindung besteht daher darin, ein Material anzugeben, das bei Aufbringen auf und/oder Einbringen in einen Gegenstand wenigstens eines der obengenannten Probleme löst.

Ein solches Material ist in Anspruch 1 angegeben. Die weiteren Ansprüche geben bevorzugte Ausbildungen, Verwendungen und Produkte an.

Demgemäss zeichnet sich die erfindungsgemässe Lackmischung zunächst dadurch aus, dass sie wenigstens aus einer Mischung aus Binder und Härter besteht. Der Binder ist bevorzugt ein Reaktionslack, insbesondere ein Polyacrylatharz. Der Härterzusatz wird passend zum Binder ausgewählt, um die Härtung des Binders zu bewirken, z.B. durch Vernetzen. Derartige Systeme sind an sich bekannt. Insbesondere ist auch die Verwendung von Isocyanat-Härter in Verbindung mit Polyacrylatharz bekannt. Ebenso ist der Zusatz von Weichmachern an sich bekannt, wie z.B. Phtalsäureester. Sie dienen dazu, dem ausgehärteten Material eine gewisse Weichheit zu verleihen und der Sprödigkeit entgegen zu wirken.

Überraschend wurde jedoch gefunden, dass, wenn der Anteil an Weichmacher volumenmässig mindestens so gross ist wie derjenige an Binder, eine Polymermasse resultiert, die immer noch "härtbar" ist, aber ein dauerhaft hochflexibles Material ergibt. Diese Eigenschaften bleiben dabei auch bei einem deutlichen Überschuss an Weichmacher erhalten.

Zu erwähnen ist auch die Möglichkeit, das ausgehärtete Polymermaterial durch Abkühlen zu versteifen. In diesem Zustand kann die Oberfläche geschliffen und bis auf Hochglanz poliert werden. Für diese Oberflächenbearbeitungsvorgänge haben sich erniedrigte Temperaturen unterhalb der Raumtemperatur, insbesondere von höchstens 15 °C bis -5 °C, als besonderes vorteilhaft erwiesen.

Für die Zusammensetzung werden im weiteren Volumenanteile in Beschreibung und Ansprüchen angegeben, soweit nicht anders angegeben.

Die erfindungsgemässe Lackmischung weist wenigstens die Komponenten Binder, Weichmacher (Elastifizierer) und Härter auf. Daneben kann noch für eine bessere Verarbeitbarkeit 0-20 Vol-% Verdünner zugesetzt werden. Weiter können Füllstoffe und Hilfsstoffe wie Steinmehl, Fasermaterial (z.B. Holzfasern), Farbstoff, zugesetzt werden, um das Erscheinungsbild und andere Eigenschaften anzupassen, wie Farbe, Transparenz.

Im Folgenden werden Ausführungsbeispiele der Erfindung und deren Verwendung näher beschrieben.

Die Lackmischung umfasst einen Stammlack (Bindemittel), einen Elastifizierer (Weichmacher), einen Härter sowie einen Verdünner, wobei der Härter erst vor der Anwendung beigemischt wird. Auch ist es möglich, den Verdünner erst bei der Anwendung vor oder nach dem Härter beizumischen. Der Stammlack besteht aus Polyacrylatharzen. Es kann, je nach Schicht und Fläche, ein Normal-, Langsam- oder Schnellhärter verwendet werden.

Der Elastifizierer besteht aus Phtalsäureester. Der Härter besteht aus Isocyanat, bevorzugt aus aliphatischem Isocyanat. Der Verdünner besteht aus Acrylverdünner. Beim Trocknungsvorgang findet eine Polyadditionsreaktion statt.

Eine beispielhafte Kombination zeichnet sich durch folgende Komponente aus:
- Stammlack: Harz auf der Basis von Copolymeren von Methylmetacrylat und Styrol, gelöst in einem geeigneten, an sich gängigen Lösungsmittelgemisch. Volumenanteil des Lösungsmittels (gaschromatografisch bestimmt): ca. 83 Vol.-%.
- Härter: aliphatische Triisocyanate in geeignetem Lösungsmittelgemisch.
- Elastifizierer: Polyester auf Isophtalsäurebasis mit Etherbrücken und endständigen Hydroxylgruppen, u.a. bekannt als Desmophen (Bayer), in Lösungsmittelgemisch.

Die genannten Komponenten sind an sich bekannt.

In einer Anwendung wird Lack zur Beschichtung von Substraten verwendet, wobei das Substrat auf einem oder mehreren Substratträgern befindlich sein kann. Vorzugsweise wird der Lack in mehreren Arbeitsgängen aufgetragen, wobei nach Trocknung einer Schicht die Schicht beispielsweise mit Schleifpapier nassgeschliffen wird. Am Schluss kann noch ein Poliervorgang erfolgen, wozu die Lackschicht bzw. das ganze Werkstück abgekühlt wird.

Im Weiteren kann die Lackmischung mit Gesteinsmehl vermischt und als Mörtel bei der Ausbesserung von Fassaden, Skulpturen usw. verwendet werden. Im weiteren eignet sich die Lackmischung als Imprägnierungsmittel und Klebstoff. Der Trocknungsvorgang kann unter Verwendung von energiesparenden Infrarotlampen bedeutend verkürzt werden, beispielsweise auf eine Zeit von etwa 1 - 60 Min.

Eine bevorzugte allgemeine Zusammensetzung ist:
100 Volumenanteile Stammlack
bis zu 500 Volumenteile Elastifizierer
50 bis 1000 Volumenteile Härter

Im Hinblick auf die Gewichtsanteile der jeweiligen aktiven Komponenten können zur Herstellung der erfindungsgemässen Lackzusammensetzung folgende Regeln herangezogen werden:

Auf 100 Gewichtsteile an reaktiver Binderkomponente (z. B. Acrylatharz) im Stammlack werden mindestens 66 Gew.-Teile aktive Elastifiziererkomponente, z. B. Phtalsäureester, bevorzugt mindestens 100 und besonders bevorzugt mindestens 250 Gew.-Teile eingesetzt. Von der Härterkomponente (z. B. Isocyanat) werden, ebenfalls bezogen auf 100 Gew.-Teile Binderkomponente, bevorzugt mindestens 50 Gew.-Teile, weiter bevorzugt mindestens 150 und insbesondere bevorzugt 425 Gew.-Teile eingesetzt.

Dabei stellen die jeweiligen Komponenten jeweils die Gesamtheit der eingesetzten Substanzen dar, also z. B. der Gesamtanteil der als Binder wirkenden Substanzen im Stammlack.

Daneben können noch Farbmittel und Hilfsstoffe, insbesondere Lösungsmittel, je nach Anforderungen zugesetzt werden, wie sie im Stand der Technik bekannt sind. Ausserdem kann ein Verdünner zugesetzt werden, um die Verarbeitungs- und Aushärteeigenschaften einzustellen.

Im Folgenden werden verschiedene Mischungsverhältnisse sowie deren spezifische Verwendung angegeben. Es werden folgende Abkürzungen verwendet:

St: Stammlack, E: Elastifizierer, H: Härter, V: Verdünner. Die Zahlen beziehen sich auf Volumenteile. Wenn zum Verdünner keine Angabe gemacht wird, so beträgt dessen Anteil zwischen 0 und 20 Volumenprozent der Lackmischung.

Es werden drei Gruppen von Zusammensetzungen angegeben, die von Gruppe zu Gruppe steigende Elastizität aufweisen. Die Mitglieder einer Gruppe können allein, z.B. die "Universalmischung", oder in Kombination verwendet werden, z.B. zuerst "Erste Lackierschicht", dann "Oberste Schicht" (s. Gruppe 1).
Gruppe 1:
   St: 100, E: 150, H: 50: Erste Lackierschicht, besonders für Holz.
   St: 100, E: 150, H: 500: Oberste Lackierschicht.
   St: 100, E: 150, H: 200: Universalmischung bei Lackierungen, Verwendung als Bindemittel für Gesteinsmehl und Holzspäne sowie als Imprägnierungsmittel.
   St: 100, E: 200, H: 250: Oberste Schicht bei Beschichtungen sowie Verwendung als Bindemittel.
Gruppe 2:
   St. 100, E: 250, H: 125: Allgemein Bindemittel sowie erste Lackschicht.
   St: 100, E: 250, H: 700: Schlusslackierung.
   St: 100, E: 250, H: 300: geeignet sowohl als Bindemittel wie auch als Schlusslackierung.
Gruppe 3:
   St: 100, E: 300, H: 150: Klebrige Grundlackierung.
   St: 100, E: 300, H: 800: Zwischenschicht und Schlusslackierung.
   St: 100, E: 300, H: 350: Allgemein Verwendung als Bindemittel sowie als Schlusslackierung.

Im Folgenden werden Beispiele von Beschichtungsverfahren angegeben. Als Schleifmittel können Trocken- und Nass-Schleifpapier, Schleifgewebe (Flies), Schleif- und Polierpasten, Bimssteinmehl, Hochglanzpolituren, normale und auch silikonfreie, Polierfäden und Baumwollgewebe verwendet werden. Das Trocknen kann beispielsweise durch Lagern bei Umgebungstemperatur, aber auch forciert bei Temperaturen bis 80 °C und/oder durch Strahlung (Hochfrequenzwellen im Radiobereich, Mikrowellen, Infrarot, Elektronenstrahlung, UV-Strahlung usw) erfolgen.

### 1. Beispiel:

Als Substrat wird Mahagonifurnier mit einer Dicke von 0,2 mm auf Neopren verwendet. Der Substratträger wird auf eine ebene Fläche, beispielsweise ein Brett, geheftet, wobei das Holz zur Vermeidung von Blasenbildung trocken sein muss. Es wird folgende Lackmischung verwendet:
1 Teil Stammlack, 1,5 Teile Elastifizierer, 2 Teile Härter und 0,5 Teile Verdünner.

Der Lack wird mit einer Fliessbecher-Pistole mit 1,5 mm Düse im Kreuzgang gespritzt, wobei der Spritzdruck 2,5 bis 5 bar beträgt. Während 5 min wird abgelüftet und eine beschleunigte Trocknung bei 60 °C während 60 min durchgeführt, wobei man anschliessend die Lackschicht abkühlen lässt. Die Fläche wird mit 600er Schleifpapier nass geschliffen, wobei eine günstige Schleiftemperatur des Objektes 10 bis 15 °C beträgt. Bei höherer Temperatur muss eine längere Trocknungszeit eingerechnet werden. Es wird mit Silikonentferner abgewaschen und mit einem Staubbindetuch abgerieben.

Es wird zum zweiten Mal Lack in einem Kreuzgang gespritzt, worauf man trocknen lässt. Anschliessend wird die Fläche mit 600er bis 800er Schleifpapier nass geschliffen. Darauf wird zum drittenmal Lack in einem Kreuzgang gespritzt, worauf man trocknen lässt. Die Fläche wird wieder nass mit 800er bis 1000er Schleifpapier geschliffen.

Für den letzten Spritzauftrag wird eine Mischung aus 1 Teil Stammlack, 1,5 Teilen Elastifizierer, 3 Teilen Härter und 0,5 Teilen Verdünner verwendet, wobei in einem Kreuzgang der Lack aufgespritzt wird und man anschliessend trocknen lässt. Mit 1000er bis 2400er Schleifpapier wird nass geschliffen und mit Silikon und wachsfreiem Hochglanzpolish manuell oder maschinell poliert. Der Poliervorgang kann erst nach sehr guter Aushärtung durchgeführt werden und zwar bei einer optimalen Objekttemperatur von -5 °C bis max. +5 °C. Die volle Beanspruchung kann frühestens nach einer Woche erfolgen. Mögliche Anwendungsgebiete sind z.B. Bootsbau, Bodenbeläge, Wandverkleidungen, etc.

### 2. Beispiel:

Als Substratträger wird Rindsleder und als Substrat Seide verwendet. Der Substratträger wird auf eine ebene Fläche geheftet und mit Textilkleber besprüht; anschliessend wird das Substrat aufgelegt. Über ein silikonbeschichtetes Papier wird mit einem Gummiroller glattgepresst und trocknen gelassen. Anstelle von Textilkleber kann wasserlöslicher Acryl-Klarlack oder die erfindungsgemässe Lackmischung als Klebstoff verwendet werden. Eine Lackmischung mit 100 Volumenteilen Stammlack, 150 Volumenteilen Elastifizierer, 200 Volumenteilen Härter und etwa 10 % Verdünner wird mit einer Fliessbecher-Pistole mit 1,5 mm Düse im Kreuzgang bei einem Spritzdruck von 2,5 bis 5 bar aufgespritzt. Es wird zwischen 10 bis 15 Minuten abgelüftet.

Ein zweiter Gang wird nass in nass in einem Kreuzgang gespritzt, wobei zwischen 5 bis 10 Minuten abgelüftet wird und anschliessend eine beschleunigte Trocknung bei 30 °C während 120 Minuten erfolgt. Anschliessend wird abgekühlt und die Fläche mit 600er bis 800er Schleifpapier nass geschliffen. Es wird zum zweiten Mal im Kreuzgang Lackmischung aufgespritzt, wonach während 5 Minuten abgelüftet wird. Anschliessend erfolgt eine beschleunigte Trocknung bei 60 °C während 60 Minuten. Die günstige Schleiftemperatur des Objektes liegt bei 10 bis 15 °C. Bei höherer Temperatur muss eine längere Trocknungszeit eingerechnet werden. Die Fläche wird mit 600er Schleifpapier nass geschliffen.

Es wird mit Silikonentferner abgewaschen und mit einem Staubbindetuch abgerieben. Es wird zum dritten Mal Lackmischung in einem Kreuzgang gespritzt, worauf man trocknen lässt. Die Fläche wird wieder nass mit einem 800er bis 1200er Schleifpapier geschliffen.

Darauf wird ein viertes Mal Lackmischung in einem Kreuzgang gespritzt, worauf man trocknen lässt. Die volle Beanspruchung kann frühestens nach einer Woche erfolgen. Staubpartikel oder Lackläufe werden mit feinsten Schleifmitteln wie nassem Schleifpapier oder Bimssteinmehl entfernt. Mit einem silikon- und wachsfreien Hochglanzpolish wird von Hand oder maschinell poliert, wobei der Poliervorgang erst nach sehr guter Aushärtung durchgeführt werden kann, und zwar bei einer optimalen Objekttemperatur von -5 °C bis maximal +5 °C. Soll ein Matteffekt erzielt werden, wird mit 1000er bis 2400er Schleifpapier nass geschliffen und mit silikon- und wachsfreiem Hochglanzpolish manuell oder maschinell poliert, um einen bestimmten Glanzgrad zu erzielen, oder man kann von Anfang an einen matten Stammlack verwenden. Das Produkt kann u.a. für Accessoires, Kleider, Schuhe, etc. verwendet werden.

### 3. Beispiel:

Als Substrat wird trockener Sandstein verwendet. Die verwendete Lackmischung enthält 1 Teil Stammlack, 1,5 Teile Elastifizierer, 2 Teile Härter sowie 1 Teil Verdünner. Die Lackmischung wird mit einem Schaumstoffroller aufgetragen, wonach 10 bis 15 Minuten abgelüftet wird. Es erfolgt eine beschleunigte Trocknung bei 60 °C während 60 Minuten, worauf abgekühlt wird.

Die Fläche wird mit 400er Schleifpapier nass geschliffen. Es wird zum zweiten Mal Lackmischung mit dem Schaumstoffroller aufgetragen und trocknen gelassen, 5 Minuten gelüftet und bei 60 °C während 60 Minuten beschleunigt getrocknet. Darauf wird die Fläche mit 600er Schleifpapier nass geschliffen und zum dritten Mal Lackmischung mit dem Schaumstoffroller aufgetragen. Nach erfolgter Trocknung wird die Fläche wieder mit 600er Schleifpapier nass geschliffen. Eine volle Beanspruchung kann frühestens nach einer Woche erfolgen.

Es ist möglich, Pigmente und lichtabsorbierende Partikel beizumischen, wobei der Lackiervorgang so oft wiederholt wird, bis die gewünschte Dichte entsteht. Um einen Matteffekt zu erzielen, kann der Stammlack mit mattierenden Mitteln vermischt werden oder es kann mit 600er Schleifpapier nass angeschliffen werden. Es ist auch noch ein Polierverfahren möglich.

Die Lackmischung kann mit einem Spritzgerät oder mit einem anderen Verfahren aufgetragen werden. Ein Anschleifen der Beschichtung ist notwendig, um eine bessere Haftung der folgenden Lackschichten zu erreichen. Das Produkt ist für Boden- und Wandverkleidungen, Möbel, etc. verwendbar.

### 4. Beispiel:

Als Substrat dienen textile Flächengebilde, z.B. Gewebe. Es wird eine Lackmischung mit 100 Volumenteilen Stammlack, 150 Volumenteilen Elastifizierer, 200 Volumenteilen Härter und ca. 10 Vol-% Verdünner verwendet. Der Stoff wird auf eine silikonbeschichtete Papierunterlage gebracht. Die Arbeitsgänge sind dieselben wie beim Beispiel 2. Dies kann für eine einseitige Behandlung durchgeführt werden. Bei einer zweiseitigen Behandlung wird das Substrat umgedreht, wobei dieselben Arbeitsgänge wie beim Beispiel 2 wiederholt werden. Anwendung: Halbprodukt für Oberflächenverkleidungen, z.B. Möbel, Accessoires, etc.

### 5. Beispiel:

Substrat: Siebe, Netze, Gitter aus Metall oder Textilien: aus Stammlack wird dieselbe Mischung wie beim 4. Beispiel verwendet. Auch die Arbeitsgänge sind dieselben wie beim 4. Beispiel. Es ist eine einseitige und beidseitige Behandlung möglich. Anwendung: Tischsets, Lampenschirme, etc.

### 6. Beispiel:

Substrat: Leder (ohne zusätzliche Farbpigmente, natürlich behandeltes Leder). Das Leder wird auf eine ebene Fläche geheftet und gleichmässig aufgespannt. Es wird eine Lackmischung wie beim Beispiel 4 verwendet oder aber eine Mischung mit 100 Volumenteile Stammlack, 250 Volumenteile Elastifizierer, 125 Volumenteile Härter und ca. 10 Vol-% Verdünner. Die Lackmischung wird in einem Kreuzgang gespritzt, wobei nach einem Spritzgang die Fläche mit 400er Schleifpapier trocken ungeschliffen wird. Die Arbeitsgänge sind dieselben wir beim vierten Beispiel. Anwendung: Möbel, Accessoires, Schuhe, etc.

### 7. Beispiel:

Substrat: Leder oder Lederimitationen (jede Art von Leder mit natürlicher Narbung, ohne zusätzliche Behandlung wie Imprägnierung gegen Wasser). Es wird eine Lackmischung wie beim vierten Ausführungsbeispiel verwendet. Die Arbeitsgänge sind ebenfalls dieselben wie beim vierten Ausführungsbeispiel. Anwendung: Auto, Bootsinterieur, Schuhe, Möbel.

### 8. Beispiel:

Substrat: Schweinsvelours-Leder. Das Leder wird auf eine ebene, nicht durchbrochene Unterlage gespannt. In einem Kreuzgang wird die Lackmischung, bestehend aus 100 Volumenteilen Stammlack, 150 Volumenteilen Elastifizierer, 200 Volumenteilen Härter und ca. 10 Vol-% Verdünner im Spritzverfahren aufgetragen, wobei ein konventioneller oder Schnellhärter verwendet wird. Von der Anwendung des Giessverfahrens ist abzuraten, da das Lösungsmittel in die unteren Lederschichten eindringen würde, was zu Verklebungen und Fleckenbildung führen kann. Nach der erforderlichen Trocknungszeit wird die Oberfläche mit einem Schleifpapier 400 trocken ungeschliffen. Das Nassschleifen ist zu diesen Zeitpunkt noch nicht anwendbar, da die Flüssigkeit in die unteren Lederschichten eindringen und negative Folgen zeitigen würde. Es folgt der zweite Spritzgang, der bezüglich Zusammensetzung und Applikation der Lackmischung analog zum ersten ist. Nach der Trocknungszeit kann bereits nass geschliffen werden. Erscheint die Oberfläche danach einheitlich matt, kann die dritte und letzte Schicht aufgetragen werden. Sollten sich Unregelmässigkeiten zeigen, wiederholt man den zweiten Spritzgang und das Nassschleifen, bis sich der gewünschte Effekt einstellt. Jetzt kann die dritte Schicht im gleichen Verfahren aufgetragen werden. Im Unterschied zu den darunterliegenden Schichten wird nun für die Lackmischung ein konventioneller Härter verwendet. Das behandelte Leder hat knickfeste Eigenschaften, d.h. es kehrt in die ursprüngliche Form zurück, wobei die natürliche Musterung vollständig erhalten bleibt. Im weiteren ist das Leder resistent gegen Witterungseinflüsse und Chemikalien, weist eine aussergewöhnliche Widerstandsfähigkeit gegen mechanische Einflüsse auf und ist lichtecht. Mögliche Anwendungsbereiche sind: Autointerieur und -verdecke, Bootssitze und -abdeckungen, Kleidung, Accessoires, etc.

Die Lackmischung eignet sich auch zur Verwendung als Klebstoff. Es kann ein Stück Leder nach dem erwähnten Verfahren gemäss Beispiel 8 mit einer ersten Schicht beschichtet werden, worauf ein Stück bedruckten Textilmaterials aufgelegt wird und beide Teile unter einem silikonbeschichteten Papier mittels eines Rollers aneinandergedrückt werden. Die erreichte Haftung beider Materialien ist besser als bei der Verwendung eines herkömmlichen Textil-Lederklebstoffes. Weiterhin verkürzt sich die Trocknungszeit bei erhöhter Temperatur erheblich. Bei Infrarotlicht ergibt sich je nach Wellenlänge eine Trocknungszeit von etwa 1 - 60 Minuten. Das weitere Verfahren bei der Kombination Textilien/Leder ist nach dieser Phase das gleiche wie bei Leder allein. Nach erfolgtem erstem Spritzgang auf dem Textilgewebe ist bereits das Nassschleifen möglich. Im Folgenden werden beispielsweise Kombinationen von Substratträgern und Substraten aufgeführt.

| | |
|---|---|
| Substratträger: | Leder mit maschinell geprägter Musterung |
| Substrat: | Textilien, gemischte Textilien, dünn, besonders geeignet ist Seide |
| | |
| Substratträger: | Leder und Lederimitationen. |
| Substrat: | Papier, Zeitungen, Photos, Papiermuster, Papierschablonen, Papierwaren |
| | |
| Substratträger: | Leder und Lederimitationen |
| Substrat: | Pflanzenteile: Blätter, Blüten, Körner |
| | |
| Substratträger: | Leder und Lederimitationen |
| Substrat, | Metalle: Siebe, Gitter, Netze, Textilnetze, Kunststoffnetze |
| | |
| Substratträger: | Leder und Lederimitationen |
| Substrat: | Furnier 0,1 - 0,5 mm |
| | |
| Substratträger: | Leder und Lederimitationen |
| Substrat: | Tierische Teile: Gräte, Schuppen, Fischhaut |
| | |
| Substratträger: | Leder und Lederimitationen |
| Substrat: | Blattmetalle, Blattgold, Metallpulver |
| | |
| Substratträger: | Leder und Lederimitationen |
| Substrat: | Solarzellen |
| | |
| Substratträger: | Leder und Lederimitationen farbig bemalt oder farbig bedruckt |
| Substrat: | Spitzen |
| | |
| Substratträger: | Leder und Lederimitationen |
| Substrat: | Kunstfaser |
| | |
| Substratträger: | Gummi und Schaumstoffe |
| Substrat: | Furnier, Textilien, Blattmetalle, Papierartikel, pflanzliche Teile, Leder und Lederimitationen, Zeichnungen und Drucke, Gummi und Schaumstoffe, farbige Pigmente, Metallfolien und Schablonen |
| | |
| Substratträger: | Textilien |
| Substrat: | Leder in jeder bekannten Form und Lederimitationen, Textilien, Gummi und Kunststoffe, Sand, Steinmehl, Blattmetalle, Netze, Gitter, Metallschablonen |
| | |
| Substratträger: | Stein, z.B. Marmor, Granit |
| Substrat: | wie bei Textilien |
| | |
| Substratträger: | Holz |
| Substrat: | beliebig, z.B. Furnier, textile Flächengebilde |
| | |
| Substratträger: | Neopren |
| Substrat: | Holzfurnier |

Es können ein oder mehrere Substrate auf einem oder mehreren Substratträgern verwendet werden. Eine weitere Verwendung der Lackmischung ist die imprägnierung von Leder im Tauchverfahren. Es empfiehlt sich, die Oberfläche vor dem Bad aufzurauhen und das Leder in angetrocknetem Zustand unter hohem Druck zu walzen. Die so erzielte Widerstandsfähigkeit ist extrem hoch.

Zur Schmuckherstellung sind auch Kombinationen von Leder und Steinmehl (Marmor/Kristalle, usw.) geeignet. Die Kombination von Leder mit Holz hat den Vorteil, dass die ästhetisch ansprechende Oberflächenstruktur von Holz mit der Flexibilität von Leder kombiniert werden kann. Diese Kombination findet beispielsweise Verwendung bei Motorradanzügen und -sitzen, Accessoires, Gartenmöbel, bei der Innenausstattung von Autos, beispielsweise Lenkrad, beim Bootsbau, usw. Die mit der Lackmischung beschichtete Kombination von Blattmetall und Leder eignet sich beispielsweise für Bücher, Koffer, Möbel usw. Allgemein können bei der Beschichtung mit der Lackmischung die unteren Schichten "weicher", d.h. mit mehr Elastifizierer, und nur die oberste "hart", d.h. mit weniger Elastifizerer, ausgeführt werden. Dies hat den Vorteil, dass dem Lack eine gewisse Elastizität erhalten bleibt, und mechanische Einflüsse in hohem Masse absorbiert werden (Speziell bei Holz, Metall, Stein, Plexiglas).

Die Lackmischung eignet sich auch zur Behandlung von Holzoberflächen, wobei die Lackmischung ideal in die Struktur des Holzes eindringt. Dies gilt insbesondere für Furnierholz. Auch bei Holz werden vorzugsweise die untersten Schichten weicher gehalten und nur die obersten hart ausgeführt. Bei der Verwendung eines weichen Lackes wird das zu schleifende Objekt auf eine Temperatur von -15 bis 15 °C abgekühlt. Bei höheren Temperaturen ist es aufgrund der Weichheit des Lackes schwieriger, diesen mit Papier der Körnung 1200 oder feiner zu schleifen. Darüber hinaus kann bei tieferen Temperaturen früher mit dem Schleifen begonnen werden. Da bei Holz eine absolut ebene Oberfläche gefragt ist, kommt der Politur eine entscheidende Bedeutung zu. Der beste Erfolg wird beim Polieren bei einer Temperatur von -5 bis 0 °C erzielt. Nach der Behandlung zeichnet sich das Holz durch eine enorme Resistenz gegenüber Witterungseinflüssen aus (Anwendung: Bootsbau, freistehende Holzkonstruktionen, Bootsstege, Haushalt etc.) Zerkleinerte Holzabfälle können mit der Lackmischung verbunden werden, wobei sich mit entsprechenden Apparaturen Platten beliebiger Grösse und Farbe herstellen lassen, die auch mit der Lackmischung oberflächenbehandelt werden können. Der Vorteil gegenüber herkömmlichen Spanplatten besteht darin, dass sich Platten ab der Stärke von Furnierholz mühelos herstellen lassen. Diese Platten weisen eine grosse Flexibilität und eine glänzende Oberfläche auf.

Ein grosses Problem vieler Städte ist, dass sich aufgrund der Luftverschmutzung die Erosion von Naturstein, insbesondere Sandstein, massiv beschleunigt. Der zerstörerische Einfluss von Wärme und Kälte, Licht, Wasser, Salzen, giftigen Emissionen etc. auf den Stein lässt sich aber erheblich verringern. Einerseits kann man neu eingesetzte Steine von vornherein mit der Lackmischung behandeln, andererseits aber auch bereits stark angewitterten Sandstein damit konservieren. Der grosse Vorteil dabei ist, dass aufgrund der grossen Saugfähigkeit des Steines ein Abschleifen bis auf die noch intakten Schichten in vielen Fällen überflüssig wird. Der in den Stein eindringende Lack schützt diesen somit dauerhaft vor den erwähnten zerstörerischen Einflüssen. Der Lack kann z.B. im Spritz-, Streich- oder Giessverfahren aufgetragen werden. Die Aussentemperatur sollte nicht unter 16 °C liegen. Die erste aufgetragene Schicht dringt vollständig in den Stein ein, die darauffolgenden immer weniger weit, bis der Lack auf der Oberfläche bleibt. Zu diesem Zeitpunkt verteilt man Mehl des zu behandelnden Steines auf die noch feuchte Schicht. Das Mehl verbindet sich mit der Lackschicht und bildet nach dem Aushärten eine elastische chemisch resistente Schicht mit dem Aussehen eines Steins.

Durch Schleifen lässt sich das Aussehen der Oberfläche beliebig variieren. Neue Platten an exponierten Stellen, z.B. Fassaden und Böden, können beispielsweise auf Hochglanz gebracht oder perfekt an den bereits vorhandenen Stein angeglichen werden. Je feiner das verwendete Schleifmittel ist, desto glänzender erscheint der Lack. Auf das Schleifen und Polieren kann auch gänzlich verzichtet werden.

Durch die Verwendung von Farbpigmenten kann jeder gewünschte Farbton erzielt werden (wichtig z.B. bei Restaurationen). Durch Vermischung der Lackmischung mit Gesteinsmehl erhält man ein Konstruktionsmaterial mit vorzüglichem Haftungsverhalten. Seine elastischen Eigenschaften sind ideal zur Verwendung für Teile, die grossen Temperaturschwankungen ausgesetzt sind. Das Konstruktionsmaterial stellt somit die sinnvollste Ergänzung zu dem oberflächenbehandelten Stein dar. Ein Vergleich zwischen herkömmlichem und dem erfindungsgemässen Konstruktionsmaterial zeigt dessen weitere Vorteile: Auch für das geübte Auge ist das Konstruktionsmaterial nicht von z.B. einer Sandsteinplatte zu unterscheiden. Auch dem Nichtfachmann ist es problemlos möglich, jede gewünschte Struktur und Schattierung herzustellen. Es ist beispielsweise möglich, das Konstruktionsmaterial wie eine bereits leicht angewitterte Platte aussehen zu lassen, was bei kunsthistorischen Restaurationen von fundamentaler Bedeutung ist.

Bei Schlägen oder sonstigen mechanischen Belastungen, unter denen herkömmliches Konstruktionsmaterial bricht, bleibt das erfindungsgemässe Konstruktionsmaterial aufgrund seines elastischen Verhaltens stabil. Für partielle Restaurierungen ist es möglich, durch blosses Schneiden mit einem Messer o.ä. das betreffende Teil vom Konstruktionsmaterial zu trennen. Bis anhin war dies oft mit unerwünschten Beeinträchtigungen nicht betroffener Teile verbunden. Aufgrund seiner Komponenten stellt auch das Entfernen von Farbe (Sprayattacken, Farbbeutel u.ä.) kein Problem mehr dar. Das Konstruktionsmaterial lässt sich mühelos mit Nitroverdünner und einer Bürste reinigen, ohne selbst dabei angegriffen zu werden. Bekannterweise schädigen herkömmliche Reinigungsmethoden den Stein oftmals erheblich.

Eine weitere Möglichkeit zur Anwendung des Konstruktionsmaterials ist, es auf ein Kunststoff- oder Metallgitter aufzutragen. Es entstehen so dauerhafte Verkleidungen, die in jeder Farbe herzustellen sind. Anstatt wie bisher den Stein mit herkömmlichen Farben zu streichen, was ohnehin nicht besonders dauerhaft ist, kann man nun die bereits gefärbte Verkleidung fixieren und gegebenenfalls ebenso mühelos wieder entfernen. Im übrigen kann man das Konstruktionsmaterial auf Backstein, Zement und andere Baumaterialien auftragen, was täuschend echte und vor allem dauerhafte Imitationen ergibt. Auch kann das Konstruktionsmaterial natürlich mit ergänzenden, z.B. feuerresistenten Stoffen durchmischt werden.

Mit der Lackmischung behandelte Textilien sind luftdurchlässig, wasserunempfindlich, kochfest, bügelbar und lichtecht. Dazu bestreicht man eine ebene Unterlage mit der Lackmischung, legt das Textilmaterial darauf, bedeckt dieses mit silikonbeschichtetem Papier und fährt unter Druck mit einem Roller darüber. Dies gewährleistet eine gleichmässige Verteilung und ein gutes Eindringen der Lackmischung in das Gewebe. Eine entsprechende Behandlung empfiehlt sich bei allen witterungsausgesetzten Textilien. Aufgrund ihrer so erworbenen Resistenz gegen Chemikalien lassen sich diese Textilien besonders gut reinigen. Dadurch erweitert sich das Einsatzspektrum von Textilien erheblich. So kann man Textilien mit Kunststoffunterlagen kombinieren und diese z.B. anstelle von Kacheln verwenden. Grosse Kunststoffflächen (Lastwagenabdeckungen, Zirkuszelte u.ä.) lassen sich durch die Lackmischung dauerhaft schützen.

Eventuell vorhandene Aufdrucke bleiben dauerhaft konserviert. Insbesondere ist das Einbetten von textilen Produkten aus Carbonfasern, Aramidfaser, Glasfilamentgewebe, Polyethylen oder Mischungen daraus denkbar.

Eine weitere Einsatzmöglichkeit ist die Behandlung von Fotohintergründen, deren Farbe und Flexibilität somit über lange Zeit erhalten bleiben. Auch der Schutz von Bildern, z.B. in Museen und Kirchen, kann durch die Lackmischung verbessert werden. Dazu spannt man unter Vakuum eine Plastikfolie über das Bild. Auf diese Folie wird nun die Lackmischung aufgetragen und schützt das Bild vor Licht, Säure- und Farbattacken, ohne selber mit ihm in Berührung zu kommen. Es entsteht eine Schicht mit glasartigen Eigenschaften, welche vom Betrachter kaum wahrgenommen werden kann. Soll die Folie entfernt werden, wird einfach das Vakuum aufgehoben und die Schicht löst sich, ohne die Farbpigmente im geringsten zu beeinträchtigen.

Auch Skulpturen aus Stein und Metall können auf die gleiche Weise geschützt werden. Allerdings wird die oberste Schicht hier mit Pulver des darunterliegenden Materials angereichert, um die Schutzschicht quasi unsichtbar zu machen.

Auch elektrische und elektronische Bauteile können mit der Lackmischung vor Feuchtigkeit und mechanischer Beschädigung geschützt werden, ohne dass ihre Funktion dadurch beeinträchtigt würde.

Durch die Behandlung mit der Lackmischung werden auch geschützt: Negative, Positive, Plexiglas, bemaltes Glas, etc. Eloxierte Metalle werden durch die Lackmischung zuverlässig vor Ausbleichung und mechanischer Beschädigung geschützt (eloxierte oder bemalte Fassaden, im Flugzeugbau sowie bei Bus und Bahn). Insbesondere können Metalloberflächen mit einer hochglänzenden, elastischen und chemisch resistenten Oberfläche versehen werden, die dazu kratzfest ist. Bevorzugt wir daher zunächst eine klebrige Schicht aufgetragen, die also eine geringe Menge Härter enthält. Darauf folgen eine oder ggf. mehrere Schichten, die zu einer nicht-klebrigen Schicht aushärtbar sind. Durch die Abfolge wird eine relativ dicke Schicht erzielt, die trotz des Auftrags in mindestens zwei Arbeitsgängen in sich einen hohen Zusammenhalt aufweist. Die weiteren Schichten können z.B. wechselweise klebrig/nicht-klebrig sein, um den Zusammenhalt der Lagen durch die klebrigen Lagen sicherzustellen. Die oberste Lage wird dabei, sofern nicht eine klebrige Oberfläche erforderlich ist, mit einer nichtklebrigen Zusammensetzung ausgeführt.

Denkbar ist auch, die Lackmischung als Rostschutz bei Metallbauteilen wie Federn einzusetzen. Gummi- und Kunststoffteile werden vor der Zersetzung durch intensive Sonneneinstrahlung bewahrt. Auch verringert sich das Abnützungsverhalten bei Reifen, Treibriemen, Dichtungen etc. Durch die Verwendung dieses weichen Lackes ist die Abnützung durch Flüssigkeiten im Inneren von Rohren jedwelcher Art geringer. Die Beschichtung von Transportbändern bringt Vorteile hinsichtlich Stabilität und geringerer Haftung am transportierten Material. Bei Bedarf können auch Isolierund Styroporplatten konserviert werden. Bei behandelten Glas- und Keramikgefässen bleiben die Scherben nach einem Sturz grösstenteils durch den Lack miteinander verbunden.

Die Komponenten der Lackmischung können wie folgt in Büchsen gelagert werden: Lack und Elastifizierer (Weichmacher); Lack, Elastifizierer und Verdünner; Lack, Weichmacher, Verdünner und Gesteinsmehl; Lack, Weichmacher und Gesteinsmehl. Dazu kommt zu jeder Büchse eine zweite, die eine bestimmte Menge eines Härters (lang/schnell/normal) enthält. Auch kann der Verdünner in einer separaten Büchse gelagert werden.

Die Handelsbezeichnungen der bevorzugt verwendeten Lackkomponenten lauten wie folgt:

| Stammlack: | | |
|---|---|---|
| Glasurit | HS-Multi Klarlack | 923-255 |
| Glasurit | HS-UV Klarlack | 923-109 |
| Glasurit | Acryllack farblos matt | 923-55 |
| Glasurit | MS-Klarlack | 923-43 |
| Glasurit | MS-Klarlack Universal | 923-155 |
| Glasurit | Klarlack | 923-57 |

| Elastifizierer: | | |
|---|---|---|
| Glasurit | Softface-Zusatz | 522-111 |

| Härter: | | |
|---|---|---|
| Glasurit | MS-Härter normal | 929-73 |
| Glasurit | MS-Härter kurz | 929-71 |
| Glasurit | MS-Härter lang | 929-74 |
| Glasurit | HS-Härter normal | 929-93 |
| Glasurit | HS-Härter kurz | 929-91 |
| Glasurit | HS-Härter lang | 929-94 |

| Verdünner: | | |
|---|---|---|
| Glasurit | Einstellzusatz normal | 352-91 |
| Glasurit | Einstellzusatz kurz | 352-50 |
| Glasurit | Einstellzusatz lang | 352-216 |

(Glasurit: Marke der BASF Lacke + Farben AG, Münster,.DE; bzw. BASF Coatings AG, Münster, DE)

## Patentansprüche

1. Lackmischung, **dadurch gekennzeichnet, dass** sie einen Reaktionslack als Stammlack, einen Härter, einen Weichmacher und optional einen Verdünner enthält, wobei volumenmässig mehr Elastifizierer als Stammlack vorhanden ist.

2. Lackmischung nach Patentanspruch 1, **dadurch gekennzeichnet, dass** der Stammlack ein Polyacrylatharz, der Härter ein Isocyanat, bevorzugt ein aliphatisches Isocyanat, der Weichmacher ein Phtalsäureester und der Verdünner ein Acrylverdünner ist.

3. Lackmischung nach einem der vorangehenden Patentansprüche, **dadurch gekennzeichnet, dass** der Anteil des Stammlacks etwa 100 Volumenteile, des Weichmachers 150-300 Volumenteile und des Härters 62,5-800 Volumenteile beträgt.

4. Lackmischung nach einem der vorangehenden Patentansprüche, **dadurch gekennzeichnet, dass** der Anteil des Härters wenigstens 200 Volumenteile beträgt.

5. Lackmischung nach einem der vorangehenden Patentansprüche, **dadurch gekennzeichnet, dass** der Verdünner bis etwa 20 Volumenprozent der Lackmischung ausmacht.

6. Lackmischung nach einem der vorangehenden Patentansprüche, **dadurch gekennzeichnet, dass** auf 100 Gew.-Teile an aktiver Binderkomponente des Stammlacks 66 Gew.-Teile aktive Elastifiziererkomponente, bevorzugt mindestens 100 und weiter bevorzugt mindestens 250 Gew.-Teile vorhanden sind.

7. Lackmischung nach einem der vorangehenden Patentansprüche, **dadurch gekennzeichnet, dass** auf 100 Gew.-Teile an aktiver Binderkomponente des Stammlacks 50 Gew.-Teile aktive Elastifiziererkomponente, bevorzugt mindestens 150 und weiter bevorzugt mindestens 425 Gew.-Teile vorhanden sind.

8. Lackmischung nach einem der vorangehenden Patentansprüche, **dadurch gekennzeichnet, dass** der Stammlack eine wirksame Menge Farbpigmente enthält.

9. Verwendung der Lackmischung nach einem der vorangehenden Patentansprüche zur Oberflächenbeschichtung von Substraten, wobei mindestens eine Lackschicht aufgetragen wird.

10. Verwendung nach Patentanspruch 9, **dadurch gekennzeichnet, dass** in einem ersten Arbeitsgang eine Lackschicht auf das Substrat aufgetragen wird und nach deren Trocknung in einem zweiten Arbeitsgang die Lackschicht geschliffen wird.

11. Verwendung nach Patentanspruch 10, **dadurch gekennzeichnet, dass** die beiden Arbeitsgänge einmal oder mehrmals wiederholt werden.

12. Verwendung nach Patentanspruch 9 bis 11, **dadurch gekennzeichnet, dass** am Schluss die Oberfläche poliert wird.

13. Verwendung nach einem der Patentansprüche 10 bis 12, **dadurch gekennzeichnet, dass** die Oberflächenbearbeitung des Schleifens bei einer Temperatur, bevorzugt einer erniedrigten Temperatur, durchgeführt wird, bei der die Lackmischung eine für das Schleifen geeignete Eigenschaft, insbesondere Härte, aufweist, um eine glatte Oberfläche zu erzielen.

14. Verwendung nach einem der Patentansprüche 12 bis 13, **dadurch gekennzeichnet, dass** die Oberflächenbearbeitung des Polierens bei einer Temperatur, insbesondere einer erniedrigten Temperatur, durchgeführt wird, bei der die Lackmischung eine für das Polieren geeignete Eigenschaft, insbesondere Härte, aufweist, um eine glatte Oberfläche zu erzielen.

15. Verwendung nach einem der Patentansprüche 13 bis 14, **dadurch gekennzeichnet, dass** die Oberflächenbearbeitung durch Schleifen und/oder Polieren bei einer Temperatur im Bereich -30 °C bis +50 °C, weiter bevorzugt im Bereich -30 °C bis +15 °C, durchgeführt wird.

16. Verwendung nach einem der Patentansprüche 9 bis 15, **dadurch gekennzeichnet, dass** das Trocknen der Lackschicht im Temperaturbereich 10 °C bis etwa 80 °C und/oder unter Strahlungseinwirkung.

17. Verwendung nach einem der Patentansprüche 9 bis 16, **dadurch gekennzeichnet dass** mindestens ein Substrat auf mindestens einem Substratträger aufgebracht wird, wobei das Substrat auf dem Substratträger durch die Lackmischung befestigt wird, die zwischen Substrat und Substratträger aufgebracht wird und/oder die mit der Substrat versetzt ist oder mit dem das Substrat getränkt ist, so dass die Lackmischung in Kontakt mit dem Substratträger kommt, um eine Klebeverbindung herzustellen.

18. Verwendung nach einem der Patentansprüche 9 bis 17, **dadurch gekennzeichnet, dass** das Substrat aus Holz, Furnierholz, Leder, Lederimitation, Textilien, Stein, Metall, Gummi oder Kunststoff besteht.

19. Verwendung nach Patentanspruch 17 oder 18, **dadurch gekennzeichnet, dass** der Substratträger aus Leder, Lederimitation, Gummi, Schaumstoff, Holz, Textilien, Stein, Metall oder Kunststoff besteht.

20. Verwendung der Lackmischung nach einem der Patentansprüche 1 bis 8, **dadurch gekennzeichnet dass** die Lackmischung mit einem Füllstoff, insbesondere Holzteilen, Holzfasern, Steinmehl, vermischt wird, um nach dem Abtrocknen ein flexibles Material mit einem Aussehen zu erhalten, das einem Körper aus massivem Füllstoff ähnlich ist.

21. Verwendung gemäss Anspruch 20, **dadurch gekennzeichnet dass** das Material zur Herstellung von Platten, als Verblendmaterial, als Verbindungsmaterial und/oder als Konstruktionsmaterial, insbesondere als Mörtel, eingesetzt wird.

22. Konstruktionsmaterial, **dadurch gekennzeichnet, dass** es aus einer Mischung, umfassend Steinmehl und der Lackmischung gemäss einem der Ansprüche 1 bis 8, gebildet wird.

23. Flexibles Material, in dem ein textiles Flächengebilde in eine oder mehreren Lagen in eine getrocknete Lackmischung gemäss einer der Ansprüche 1 bis 8 eingebettet ist.

24. Material gemäss Anspruch 23, wobei die Lackmischung auf wenigstens einer Seite eine im wesentlichen geschlossene Oberfläche bildet.

25. Material gemäss einem der Ansprüche 23 bis 24, wobei mindestens eines der eingebetteten textilen Flächengebilde aus hochfestem Fasermaterial besteht, insbesondere aus Carbonfasern, Aramidfaser, Glasfilamentgewebe, Polyethylen.

26. Material beinhaltend eine Lackmischung gemäss einem der Ansprüche 1 bis 8 und mindestens zwei flexible, natürliche oder künstliche Flächengebilde, wovon bevorzugt mindestens eines ein textiles Flächengebilde, und weiter bevorzugt ein Gewebe oder Gelege ist, in dem wenigstens eines der Flächengebilde, insbesondere das Gewebe oder Gelege, mit der getrockneten Lackmischung durchsetzt und/oder in die Lackmischung eingebettet ist, wobei im wesentlichen die Flexibilität des Flächengebildes erhalten bleibt.

27. Nachgiebiger Überzug, insbesondere auf hartem Untergrund wie Stein oder Holz, wobei der Überzug im wesentlichen aus einer getrockneten Lackmischung gemäss einem der Ansprüche 1 bis 8 besteht, optional mit Zusatz von einem Füller, um das Aussehen des Überzugs an den Untergrund anzugleichen.

28. Überzug, insbesondere auf einem harten Untergrund wie Stein, Metall oder Holz, aus einer getrockneten Lackmischung gemäss einem der Ansprüche 1 bis 8, wobei der Überzug einen glatten, transparenten Überzug darstellt, um die Oberfläche des Untergrundes zu schützen.

29. Flexibles Flächengebilde, bestehend aus der getrockneten Lackmischung gemäss einem der Ansprüche 1 bis 8, in das ein Füllmaterial wie Steinmehl oder Holzfasern eingebettet ist, so dass das Flächengebilde im Aussehen dem Füllmaterial ähnlich ist.

30. Verbundmaterial, bestehend aus einem gitterförmigen Träger, insbesondere einem Metall- oder Kunststoffgitter, das in eine getrocknete Lackmischung gemäss einem der Ansprüche 1 bis 8 eingebettet ist, so dass die Oberflächeneigenschaften im wesentlichen durch die Lackmischung bestimmt sind.

31. Material gemäss einem der Ansprüche 23 bis 30, hergestellt gemäss einer Verwendung gemäss einem der Ansprüche 9 bis 22.
